(19) Europäisches Patentamt
European Patent Office
Office européen des brevets

(11) **EP 3 313 952 B1**

(12) **EUROPEAN PATENT SPECIFICATION**

(45) Date of publication and mention of the grant of the patent:
**18.12.2019 Bulletin 2019/51**

(21) Application number: **16734143.7**

(22) Date of filing: **23.06.2016**

(51) Int Cl.:
*C09K 3/18* *(2006.01)*  *C09K 3/22* *(2006.01)*
*C05C 9/00* *(2006.01)*  *C09K 17/24* *(2006.01)*
*C05C 1/00* *(2006.01)*  *C05G 3/00* *(2006.01)*
*C05G 3/04* *(2006.01)*

(86) International application number:
**PCT/US2016/038966**

(87) International publication number:
**WO 2016/210096 (29.12.2016 Gazette 2016/52)**

(54) **APPLICATION OF AQUEOUS SULFONATED AROMATIC POLYMER FOR ENHANCED WATER RETENTION**

VERWENDUNG VON WÄSSRIGEM SULFONIERTEM AROMATISCHEM POLYMER ZUR VERBESSERTEN WASSERRETENTION

APPLICATION DE POLYMÈRE AROMATIQUE SULFONÉ AQUEUX À DES FINS D'AMÉLIORATION DE RÉTENTION D'EAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.06.2015 US 201562185211 P**

(43) Date of publication of application:
**02.05.2018 Bulletin 2018/18**

(73) Proprietor: **Dow Global Technologies LLC**
**Midland, MI 48674 (US)**

(72) Inventors:
• **KU, Sung-Yu**
**Lake Jackson, TX 77566 (US)**
• **YU, Wanglin**
**Lake Jackson, TX 77566 (US)**
• **RADLER, Michael J.**
**Midland, MI 48674 (US)**
• **FOSDICK, Stephen E.**
**Freeport, TX 77541 (US)**

(74) Representative: **Boult Wade Tennant LLP**
**Salisbury Square House**
**8 Salisbury Square**
**London EC4Y 8AP (GB)**

(56) References cited:
WO-A1-2007/030885     US-A- 4 575 391
US-A- 5 238 480       US-A- 5 360 465
US-A1- 2005 022 570

• DATABASE WPI Week 201356 Thomson Scientific, London, GB; AN 2013-H19234 XP002761172, & CN 102 907 434 A (SHANDONG WEIFANG RAINBOW CHEM CO LTD) 6 February 2013 (2013-02-06)

**Description**

BACKGROUND OF THE INVENTION

Field of the Invention

The present invention relates to a method for treating an aggregation of particulates, such as soil, with an aqueous mixture containing a sulfonated aromatic polymer component.

Introduction

Farming in arid and semi-arid climates is challenging because it is difficult to retain water in soil. Global population growth and growing demands for crops in developing countries, in combination with increasing frequency of drought conditions in arid and semi-arid areas, provide a need for increasing water use efficiency in agricultural production. Increasing water holding capacity (WHC) and retaining available water capacity of soil in a plant root zone will benefit crop yield. Additionally, increasing WHC will help reduce fertilizer leaching into the environment and increase fertilizer efficiency.

Incorporating hydrogel or superabsorbent polymer (SAP) materials as soil additives is one way to increase WHC in soil. SAP soil additives have been used in horticulture, pot mix, gardening and some high value crop applications. However, a challenge with hydrogel and SAP materials is that they are challenging to deliver into a field. To introduce these materials to root level of a field, they need to be delivered in particulate form and mechanically worked into the field, but that adds an additional level of complexity to preparing a field. Alternatively, hydrogel or SAP materials can be coated directly onto seeds or agricultural enhancement agents (such as pesticides, and fertilizer). Coating seeds and agricultural enhancement agents with hydrogel or SAP materials adds expense and complexity to the agricultural process as well.

US 5 360 465 describes fugitive dust emission from granular inorganic fertilizers controlled by applying a solution of urea and lignosulfonate.

US 4 575 391 relates to a process and compositions for conditioning soils.

DATABASE WPI, 0, Derwent World Patents Index, vol. 2013, no. 56, Database accession no. 2013-H19234, XP002761172 & CN102907434 A 20130206 (SHANDONG WEIFANG RAINBOW CHEM CO LTD) [X] 1,2,7-9 * abstract * [I] 3-6,10-12 relates to aqueous mixtures.

US 5 238 480 relates to fertilizer compositions, including particles of a sparingly soluble fertilizer source having porous outer surfaces.

WO2007/030885 relates to agrochemical emulsifiable concentrate

US2005/0022570 relates to a conditioner-fertilizer for restoring or improving the cultivation properties and productivity of saline or alkaline soils.

It is desirable to identify a way to efficiently increase the WHC of the soil in a way that is readily field deliverable without adding significant complexity or added expense to current materials. It is particularly desirable to be able to deliver WHC-increasing additives to the soil of a field as an aqueous mixture so that it can be readily incorporated into an irrigation system or current aqueous mixture delivery method. Even more desirable is to identify a way to deliver WHC-increasing additives to the soil of a field as an aqueous mixture in combination with agricultural enhancement agents such as fertilizer.

BRIEF SUMMARY OF THE INVENTION

In the first aspect there is provided a method as defined in claim 1.

The present invention provides a method that can efficiently increase the water holding capacity (WHC) of an aggregation of particulates, such as soil, in a way that is readily field deliverable without adding significant complexity or added expense to current agricultural materials and agriculture processes. The present invention provides a method that delivers WHC-increasing additives to soil, such as the soil of a field, in the form of an aqueous mixture so that it can be readily incorporated into an aqueous mixture delivery method such as a current irrigation or fertilization system. The method of the present invention can even include delivering WHC-increasing additives to an aggregation of particulates, such as the soil of a field, as an aqueous mixture in combination with agricultural enhancement agents such as fertilizer.

Surprisingly, it has been discovered that treating soil with an aqueous mixture containing a sulfonated aromatic polymer component (SAPC) results in an increased WHC of the aggregation of particulates.

The present invention has utility as, for example, a method for increasing the water holding capacity of soil for growing plants.

BRIEF DESCRIPTION OF THE DRAWINGS

For the purpose of illustrating the present invention, the drawings show a form of the present invention which is presently preferred. Therefore, the following drawings illustrate nonlimiting embodiments of the present invention wherein:

Figure 1 is a schematic illustration showing a vessel containing a wetted soil sample with a water moving profile representative of a soil sample of the present invention.

Figure 2 is a graphical illustration showing plots of width/height ratio values of a water wetted area of a pre-injected SNFP promoted lateral move of water in soil. A higher width/height ratio value indicates a bigger move of water in lateral directions than in the vertical direction and will result in a wider wetting area in the soil.

Figure 3 is a graphical depiction of a wetted soil profile (shown in white) in a soil (shown in black) column vessel after the injection of 80 mL of water.

Figure 4 is a graphical depiction of a wetted soil profile (shown in white) in a soil (shown in black) column vessel after the injection of 80 mL of a solution mixture of SNFP and urea.

DETAILED DESCRIPTION OF THE INVENTION

"And/or" means "and, or alternatively". "Multiple" means two or more. All ranges include endpoints unless otherwise stated. "Molecular weight" refers to weight-average molecular weight as determined by size exclusion chromatography unless otherwise stated.

Test methods refer to the most recent test method as of the priority date of this document unless a date is indicated with the test method number as a hyphenated two digit number. References to test methods contain both a reference to the testing society and the test method number. Test method organizations are referenced by one of the following abbreviations: ASTM refers to ASTM International (formerly known as American Society for Testing and Materials); EN refers to European Norm; DIN refers to Deutsches Institute für Normung; and ISO refers to International Organization for Standards.

The present invention is a method that is useful for treating an aggregation of particulates. An aggregation of particulates is a substance comprising multiple particulates, or particles. For example, sand is an aggregation of particulates that comprises multiple silicon dioxide particulates. Desirably, the aggregation of particulates comprises organic material, especially organic particulates. Soil is an aggregation of particulates comprising multiple organic and inorganic particulates and in which organisms and/or plant life can grow. There are many different types of soil. The present invention is particularly useful for treating soil of any type.

The method of the present invention is useful for increasing the water holding capacity (WHC) of the aggregation of particulates that is treated in the method. WHC is a measure of water retention by the aggregation particulates. Determine WHC for an aggregation of particulates using the Water Holding Capacity (WHC) Measurement Method set forth in the Examples section below.

The method of the present invention requires treating soil with an aqueous mixture. "Aqueous mixture" refers to a combination of components one of which is water. Non-water components in an aqueous mixture are desirably, though not necessarily, water soluble. A component is "water soluble" if 0.01 grams (g) or more of the component dissolves into 100 milliliters (mL) of water at 23 degrees Celsius (°C) so as to form an aqueous solution. An aqueous solution is a uniform distribution of one or more than one component in water. Determine whether a component is uniformly distributed as evidenced by an absence of sedimentation or phase separation upon visual inspection of the mixture 30 minutes (min) after mixing the components of the mixture together. The aqueous mixture is desirably an aqueous solution to facilitate application of the aqueous mixture without risk of clogging application equipment with undissolved components.

The aqueous mixture is an aqueous mixture containing a sulfonated aromatic polymer component. Desirably, the sulfonated aromatic polymer component is water soluble. The sulfonated aromatic polymer component is sulfonated naphthalene formaldehyde polycondensate. The aromatic ring of the sulfonated aromatic polymer component can include on or more than one alkyl or alkylene group with one to 18 carbon atoms.

The sulfonated aromatic polymer component is preferably a polymer having a molecular weight greater than 700 grams per mole/ (g/mole), preferably 900 g/mol or greater, more preferably 1,000 g/mole or greater and can be 1,100 g/mol or greater, 1,500 g/mol or greater, 2,000 g/mole or greater, 5,000 g/mol or greater, 10,000 g/mol or greater, 25,000 g/mol or greater, 50,000 g/mol or greater and even 100,000 g/mol or greater while at the same time there is no known upper limit on molecular weight, but typically have a molecular weight of five million g/mol or less, more typically one million or less and can be 750,000 g/mol or less, 500,000 g/mol or less, 250,000 g/mol or less, 100,000 g/mol or less, even 70,000 g/mol or less, 50,000 g/mol or less, 10,000 g/mol or less, 5,000 g/mol or less or 1,250 g/mol or less. One of ordinary skill can adjust the water solubility of a sulfonated aromatic polymer component by modifying the extent of sulfonation - increasing sulfonation increases water solubility. Typically, the average extent of sulfonation is desirably 50 mole-percent (mol %) or more, preferably 90 mol % or more and at the same time is generally 100 mol % or less based on total moles of aromatic groups.

The aqueous mixture containing sulfonated aromatic polymer component can be a concentrate that is diluted prior to application to an aggregation of particulates or it can be an aqueous mixture ready for application to an aggregation of particulates. If a concentrate, the aqueous mixture can contain 0.1 weight-percent (wt %) or more, preferably 0.5 wt % or more, more preferably one wt % or more, yet more preferably five wt % or more and can contain 10 wt % or more, 20 wt % or more, 30 wt % or more and even 40 wt % or more while at the same time contains 50 wt % or less sulfonated aromatic polymer components based on total weight of the aqueous mixture containing the sulfonated aromatic polymer components. When the aqueous mixture containing sulfonated aromatic polymer component is applied to an aggregation of particulates, the concentrate of sulfonated aromatic polymer components is desirably one weight part per million (ppm) or more, preferably 10 ppm or more, more preferably 50 ppm or more and can be 100 ppm or more, 500 ppm or more, 1,000 ppm or more and even 5,000 ppm or more while at the same time is typically 10,000 ppm or less based on total weight of aqueous mixture containing the sulfonated aromatic polymer component.

The aqueous mixture containing a sulfonated aromatic polymer component can further contain other components besides water and sulfonated aromatic polymer components. Desirably, the other components are water soluble. For example, the aqueous mixture containing sulfonated aromatic polymer component can contain or be free from any one or combination of more than one of a component selected from a group consisting of anionic surfactants (such as aklylbenzene sulfonate, alkyl sulfate, alkylether sulfate, alkyldiphenylether sulfonate), nonionic surfactants (such as alkylphenol ethoxylate, linear and branched alcohol ethoxylate or alkoxylate, alkylamine ethoxylate or alkoxylate, alkylpolyglucoside), ethylene oxide and propylene oxide copolymers, soil erosion inhibitors (such as water soluble linear polyacrylamides), wetting agents, and fertilizers (such as urea-containing fertilizer including urea-containing fertilizers that contain one or more than one element selected from phosphorous, potassium, sulfur, zinc, iron, copper, boron, manganese, chlorine and molybdenum as well as ammonium nitrate fertilizer).

The fertilizer useful in the present invention can be a single fertilizer or a mixture of multiple fertilizers containing nitrogen (as N) from 0 percent (%) to 40 %, phosphor (as $P_2O_5$) from 0 to 50 %, potassium (as $K_2O$) from 0 to 50 %, calcium (as Ca) from 0 to 20 %, and sulfur (as S) from 0 to 20 %. Suitable fertilizers include ammonia, urea, ammonium nitrate, ammonium sulfate, ammonium thiosulfate, monoammonium phosphate, diammonium phosphate, ammonium polyphosphate, ammonium chloride, ammonium bicarbonate, calcium nitrate, potassium phosphates, potassium nitrate, potassium chloride, phosphoric acid, and sulfuric acid. Some commonly used commercial fertilizer examples that are suitable for this invention include 20-0-0 (N-P-K), 23-0-0, 28-0-0, 32-0-0, 4-10-10 (N-P-K), 10-34-0, 11-37-0, 17-0-0-8(Ca), 0-0-21-13(S), 15-0-0-16(S), 28-0-0-9(S), and 7.5-26-0-8(S).

Desirably, provide the aqueous mixture of sulfonated aromatic polymer component by mixing together sulfonate aromatic component and water. Typically, the sulfonated aromatic polymer component is unassociated with any other component, such as agricultural enhancement agents, when mixed into water. "Unassociated" with other components means unbound, unattached, and distinct from any other component that might be mixed into the water to form an aqueous mixture. For example, if the aqueous mixture contains both sulfonated aromatic polymer component and fertilizer then the sulfonated aromatic polymer component is unassociated with the fertilizer if the two are added separately to water as opposed to, for example, adding to water a fertilizer coated with a sulfonated aromatic polymer component. Similarly, in the aqueous mixture containing sulfonated aromatic polymer component the majority (greater than 50 wt %) of the sulfonated aromatic polymer component is unbound and unattached to other components that may be in the aqueous mixture.

It is desirable that the aqueous mixture be free of alachlor and reaction products of alachlor. Alachlor and its reaction products are useful as herbicides and one desirable application of the present invention is to increase WHC of soil for agricultural uses such as farming. Especially in such uses alachlor and its reaction products can be undesirable.

The method of the present invention is particularly well suited for agricultural applications where the aggregation of particulates is soil in a field. Agricultural processes (for example, fertilization and irrigation) already employ methods requiring application of aqueous solutions to fields and such processes can readily be adapted to incorporate the method of the present invention. For example, sulfonated aromatic polymer components can be readily introduced into irrigation lines so as to enhance WHC of soil during irrigation. As another example, an existing method for applying an aqueous solution of fertilizer can be modified so that the aqueous solution further comprising the sulfonated aromatic polymer component. Such a modified process serves to both fertilizer and increase WHC of the soil using a single process that is essentially the same as the process of solely adding fertilizer.

Unexpectedly and surprisingly, particularly effective increase in WHC when fertilizing is achieved by sequentially treating soil first with an aqueous solution of sulfonated aromatic polymer component and then treating the soil with a separate aqueous solution of fertilizer. The resulting WHC of the soil is greater than that achieve by treating with the two aqueous solution in the reverse order or by treating with a single aqueous solution containing both the sulfonated aromatic polymer component and the fertilizer and is greater than the WHC of soil treated with just water or just an aqueous solution of fertilizer.

EXAMPLES

The following examples serve to illustrate embodiments of the invention rather than define the broadest scope of the invention.

Water Holding Capacity (WHC) Measurement Method

The procedure for measuring WHC of an aggregation of particulates ("Sample") such as soil is a follows:

(1) Provide a polyvinylchloride (PVC) drain, waste and vent (DWV) coupling having a 6.35 centimeter (cm) inner diameter and a 5.74 cm height. Determine the weight of a piece of filter paper (Schleicher & Schuell No. 0980) and record as "Filter Paper Weight". Cover one end of the coupling with the piece of filter paper (and affix the filter paper to the coupling with a rubber band so that a flat smooth filter paper surface is achieved over one end (bottom) of the coupling.

(2) Weigh and record the weight (W1) of the coupling with rubber band and filter paper.

(3) Place the coupling in a 100 x 50 millimeter (mm) crystallization dish with the filter paper-covered side on the bottom against the dish. Into the coupling place 50.00 grams (g) of the Sample. Smooth the surface of the Sample with a spatula.

(4) Slowly apply 100 milliliters (mL) of aqueous fluid (for example, water or one or more than one aqueous mixture) evenly over the Sample using a dropper. Control the addition rate of the aqueous fluid so as to avoid disturbing the integrity of the Sample surface and to avoid overflow of accumulated aqueous fluid over the top of the coupling.

(5) Allow the aqueous fluid to run through the soil. The water level in the crystallization dish reaches approximately half the height of the Sample height in the coupling. Cover the open portion of the crystallization dish with plastic to prevent water evaporation from the dish. Allow the coupling with the Sample to sit in the dish for 22-26 hours (hr) to allow the Sample to saturate with aqueous fluid before proceeding.

(6) Place a 12 x 12 centimeters (cm) glass plate on top of an electronic balance (1,000 gram capacity with 0.001 g resolution). Onto the glass plate stack 6 pieces of Grade 2294 Filter Paper (110 millimeter diameter from GE Healthcare Lifescience) while making sure the pieces of filter paper are flat and free of void space between them.

(7) Remove the coupling with saturated Sample from the dish and place centrally on top of the Grade 2294 Filter Paper pieces with the filter paper of the coupling assembly against the Grade 2294 Filter Paper pieces. The Grade 2294 Filter Paper pieces will slowly wick away aqueous fluid from the filter paper of the coupling assembly and Sample. Allow to set for 30 min, after which carefully remove the coupling with the filter paper and Sample and then record the weight reading of the balance (R1). Replace the coupling with the Sample on the Grade 2294 Filter Paper pieces and allow to set for 10 min. Again, carefully remove the coupling with the filter paper, rubber band and Sample and again record the weight reading on the balance (Reading 2). If R2 is the same (within 0.05 g or less than R1 then equilibrium has been achieved and you can proceed to step (8), otherwise replace the coupling on the Grade 2294 Filter Paper pieces for another 10 min, remove and weigh. Repeat as necessary until two subsequent weight reading are within 0.05 g of one another or the second is lower than the first.

(8) Immediately measure the weight of the coupling, rubber band, filter paper and Sample after completing Step (7) to 0.001 g and record the weight as W2.

(9) Observe the Grade 2294 Filter Paper pieces. If the bottom Grade 2294 Filter Paper (that is, the one adjacent to the glass plate) is wet through, then stop the method. The method must be repeated with more pieces of Grade 2294 Filter Paper in the stack.

(10) Remove the rubber band from the coupling and transfer the Sample to a tare glass beaker. Use the filter paper to remove any Sample residue left in the coupling and transfer the Sample residue into the glass beaker. Add the filter paper to the glass beaker. Place the beaker containing the filter paper and Sample in a conventional oven at 105 degrees Celsius (°C) for at least 10 hr (overnight).

(11) Allow the beaker containing the filter paper and Sample to set at 21 °C and 50 percent (%) relative humidity (RH) for 2 hr. Measure the combined weight of the beaker, Sample and filter paper and subtract from that the weight of the filter paper and beaker to obtain the weight of the dried Sample (W3).

(12) Calculate WHC as a weight-percent of water relative to dried Sample according to the following formula:

$$WHC = 100*(W2-W1-W3)/W3$$

Materials Used in Examples

Table 1 lists components for Examples (Ex) and Comparative Examples (Comp Ex).

Table 1

| Component | Description |
|---|---|
| Sulfonated Naphthalene Formaldehyde polymer (SNFP) | This SNFP component is a water soluble neutral sodium salt of a sulfonated naphthalene formaldehyde polycondensate having a molecular weight of approximately 1,100 g/mol. The SNFP is commercially available as "OROTAN™ SN naphthalene condensate" (OROTAN is a trademark of Rohm and Haas Company). |
| Fertilizers | (1) Urea: This Fertilizer is obtained from Sigma-Aldrich.<br>(2) UAN 32 fertilizer: This Fertilizer is an aqueous mixture of urea and ammonium nitrate with the total nitrogen content of 32 %; and is a commercial product obtained from Wilbur-Ellis.<br>(3) 4-10-10 fertilizer: This Fertilizer is an aqueous solution of fertilizers containing total nitrogen, phosphorous, and potassium at about 4 %, 10 %, and 10 %, respectively; and is a commercial product obtained from Wilbur-Ellis.<br>(4) 11-37-0: an aqueous solution of ammonium polyphosphate with the total nitrogen and phosphorous at about 11 and 37%, a commercial product obtained from The J. R. Simplot Company. |
| Soil | This Soil is commercially available as "AGVISE Soil M-SL-PF" sandy loam soil and purchased from Agvise Laboratories. The Soil is sourced from North Dakota, sieved to pass 2 millimeters (mm) and composed of about 63 wt % sands, about 18 wt % silts, and about 19 wt % clays. |

Two sets of evaluations were conducted using two different batches of Soil. Each of the Examples/Comparative Examples in the First Set of Experiments used one batch of Soil. Each of the Examples/Comparative Examples in the Second Set of Experiments used one batch of Soil different from the First Set of Experiments. The WHC of the two batches of Soil are not identical, as is evident by comparing WHC values for Comp Ex A and Comp Ex B. However, within a single set of experiments (that is, within evaluations done with a single batch of Soil) the WHC values are comparable to one another.

FIRST SET OF EXPERIMENTS - First Batch of Soil

Comparative Example A - WHC using Water

Determine the WHC of Soil using the WHC Measurement Method using 100 mL deionized water as the "aqueous fluid" in the method. Repeat the procedure two times using fresh Soil samples. The WHC values for the two evaluations are 27.55 % and 27.69 %, with an average WHC value of 27.62 %.

Comparative Example 1 - 500 ppm Sulfonated Aromatic Polymer Component

Determine the WHC of Soil using the WHC Measurement Method using 100 mL aqueous mixture of 500 ppm (based on aqueous mixture weight) of SNFP dissolved in deionized water as the "aqueous fluid" in the method. Repeat the procedure two times using fresh Soil samples. The WHC values for the two evaluations are 28.00 % and 28.30 %, with an average WHC value of 28.15 %.
The increased WHC relative to Comp Ex A indicates that the sulfonated aromatic component increased the WHC of the Soil.

Comparative Example 2 - 2000 ppm Sulfonated Aromatic Polymer Component

Determine the WHC of Soil using the WHC Measurement Method using 100 mL aqueous mixture of 2,000 ppm (based on aqueous mixture weight) of SNFP dissolved in deionized water as the "aqueous fluid" in the method. Repeat the procedure two times using fresh Soil samples. The WHC values for the two evaluations are 29.77 % and 29.58 %, with an average WHC value of 29.68 %.
The increased WHC relative to Comp Ex A indicates that the sulfonated aromatic polymer component increased the WHC of the Soil.

SECOND SET OF EXPERIMENTS - Second Batch of Soil

Comparative Example B - WHC using Water, Second Set of Evaluations

Determine the WHC of Soil using the Water Holding Capacity (WHC) Measurement Method using 100 milliliters deionized water as the "aqueous fluid" in the method. Repeat the procedure two times using fresh Soil samples. The WHC values for the two evaluations are 29.26 % and 29.69 %, with an average WHC value of 29.48 %.
This value differs from that of Comp Ex A because it used a different batch of Soil as explained just below Table 1.

Comparative Examples C- WHC using Aqueous Solution Containing Fertilizer.

Determine the WHC of Soil using the WHC Measurement Method using 100 mL of an aqueous solution containing 5,000 ppm of urea (described in Table 1) dissolved therein with ppm relative to weight of the aqueous solution.
Repeat the procedure two times using fresh Soil samples. The WHC values for the two evaluations are 25.12 % and 25.08 %, with an average WHC value of 25.10 %. Comp Ex B reveals that treating Soil with a Fertilizer actually reduces the WHC of the Soil.

Comparative Example 3 - WHC using Aqueous Mixture of Fertilizer and SNFP

Determine the WHC of Soil using the WHC Measurement Method using 100 mL of an aqueous solution containing 1,000 ppm of SNFP and 5,000 ppm of urea dissolved therein, with ppm relative to weight of the aqueous solution.
Repeat the procedure two times using fresh Soil samples. The WHC values for the two evaluations are 30.01 % and 29.85 %, with an average WHC value of 29.93 %. Ex 3 reveals that treating Soil with an aqueous mixture of a Fertilizer and SNFP increases the WHC of the Soil.

Comparative Example 4 - WHC using Sequential Application of Aqueous Mixture of Fertilizer followed by Aqueous Mixture of SNFP

Determine the WHC of Soil using the WHC Measurement Method using 50 mL of an aqueous solution containing 10,000 ppm of a urea followed by 50 mL of an aqueous solution containing 2,000 ppm of SNFP, with ppm relative to weight of the pertinent aqueous solution.
Repeat the procedure two times using fresh Soil samples. The WHC values for the two evaluations are 28.53 % and 28.27 %, with an average WHC value of 28.40 %. Ex 4 reveals that treating Soil, first with an aqueous mixture of Fertilizer and then with an aqueous mixture of SNFP, increases the WHC of the Soil compared to treating Soil with just Fertilizer alone. Hence, the subsequent treatment of the aqueous mixture of SNFP increased WHC of the Soil after the aqueous mixture of Fertilizer reduced the WHC of the Soil.

Example 5 - WHC using Sequential Application of Aqueous Mixture of SNFP followed by Aqueous Mixture of Fertilizer

Determine the WHC of Soil using the Water Holding Capacity (WHC) Measurement Method using 50 milliliters of an aqueous solution containing 2,000 ppm SNFP followed by 50 milliliters of an aqueous solution containing 10,000 ppm urea, with ppm relative to weight of the pertinent aqueous solution.

Repeat the procedure four times using fresh Soil samples. The WHC values for the four evaluations are 30.80 %, 31.16 %, 32.09 % and 32.93 %, with an average WHC value of 31.75 %. This WHC value of the Soil of this Example 5 is higher than that of Soil treated with only water (Comparative Example B) or Soil treated with an aqueous mixture containing both the SNFP and Fertilizer (Example 3).

Hence, there is a surprisingly large increase in WHC for Soil if it is first treated with an aqueous mixture of sulfonated aromatic polymer (SNFP) component and then treated with an aqueous mixture of fertilizer.

## Third SET OF EXPERIMENTS - Third Batch of Soil

Comparative Example 6 - WHC using Aqueous Mixture of Fertilizer and SNFP

Determine the WHC of Soil using the WHC Measurement Method using 100 mL of an aqueous solution containing 2,000 ppm of SNFP and 5,000 ppm liquid fertilizer (UAN 3 or 4-10-10 fertilizer) dissolved therein, with ppm relative to the weight of the aqueous solution. SNFP was prepared the concentration at 2,000 ppm; UAN 32, and 4-10-10 fertilizers were prepared at a 5,000 ppm solution.

The combination of SNFP and UAN 32 (or 4-10-10 fertilizer) was prepared at 2,000 ppm of SNFP and 5,000 ppm of fertilizer. Each sample for the third set was carried out in duplicate.

The mean of WHC value for SNFP + UAN 32 (sample 4) at 23.93 %, was higher than the mean of WHC value of UAN 32 at 22.91 % (sample 3).

The mean of WHC value for SNFP + 4-10-10 (sample 6) at 25.10 %, higher than the mean of WHC value of 4-10-10 at 23.96 % (sample 5).

Ex 6 reveals that treating Soil with an aqueous mixture of Fertilizer and SNFP increases the WHC value of the Soil

Table 2

| Additive | Sample # | Water Holding Capacity (%) | |
|---|---|---|---|
| | | Mean | Std Dev |
| DI water | 1 | 23.94 | 0.17 |
| SNFP | 2 | 25.12 | 0.14 |
| UAN 32 | 3 | 22.91 | 0.69 |
| SNFP + UAN 32 | 4 | 23.93 | 0.78 |
| 4-10-10 | 5 | 23.96 | 0.56 |
| SNFP + 4-10-10 | 6 | 25.10 | 0.07 |

Comparative Example 7- Compatibility of SNFP with Liquid Fertilizers

In this Example 7, the compatibility of SNFP with the various liquid fertilizers described in Table 1 was measured as follows:
Into 20 g of UAN 32 fertilizer contained in a 250 mL glass beaker, 1.1 g of SNFP was added at room temperature (RT, about 25 °C). With gentle shaking of the beaker by hand, SNFP was completely dissolved in 5 min to form a clear solution without suspension or precipitation.

Similarly, into 20 g of 4-10-10 fertilizer, 1.1 g of SNFP was added at RT. With gentle shaking of the beaker by hand, SNFP was completely dissolved in 5 min to form a clear solution without suspension or precipitation.

Into 11-37-0 fertilizer, 2 g of water and 1.1 g of SNFP was added at RT. With gentle shaking of the beaker by hand, SNFP was completely dissolved in 5 min to form a clear solution without suspension or precipitation.

In the above series of experiments for this Example, it was found that by adding adequate amounts of water, a liquid fertilizer can be mixed with SNFP at any ratio to form a solution.

Example 7 indicates that SNFP has good compatibility with liquid fertilizers. The good compatibility of the SNFP with liquid fertilizers makes it possible to apply a SNFP and a liquid fertilizer together in practice for agricultural applications. The present invention provides a process for treating an aggregation of particulates, such as soil, with an aqueous mixture that increases the water holding capacity and retains the available water capacity of, for example, soil in a plant root zone to benefit crop yield.

Comparative Example 8 - Change Water Moving Profile in Soil with SNFP

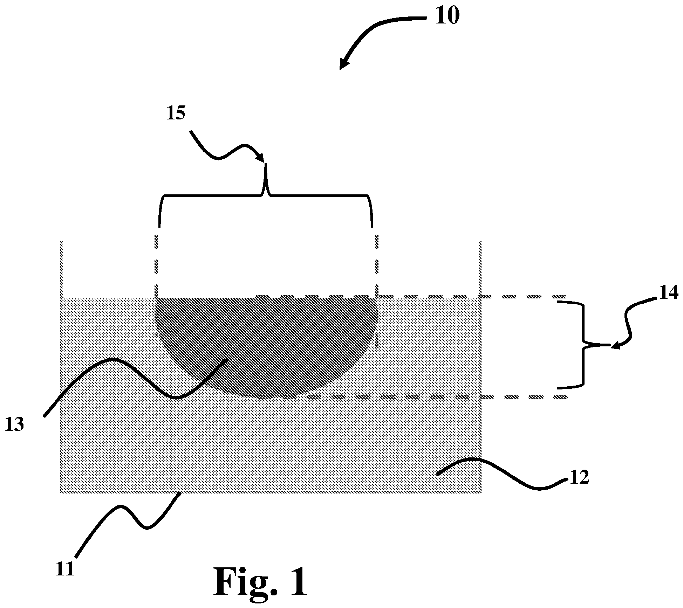

Prepare a dry semi-round vessel (size 1.2 Liter) to hold a sample of soil and fill 950 g of soil into the vessel. Assist packing the soil in the vessel by tapping the bottom of the vessel three times. 10 mL of solution (water or SNFP) was first injected into the soil with a syringe pump just below the surface of the soil (-20 mm) to mimic the process of sub-surface irrigation. Then, water was continuously injected. The water moving profile was recorded as the water injection occurred. The injection rate of the water remained constant at 10 milliliters/hour (mL/hr). A representative of a water moving profile of the present invention is shown in Figure 1.

With reference to Figure 1, there is shown a schematic representation of an apparatus 10 for measuring a dimensional symmetry of a water wetting pattern. The apparatus 10 includes a vessel 11 containing a soil sample 12. The soil sample 12 has a water moving profile or wetted soil pattern 13 caused by injecting water into the soil sample. The height (H) of the water moving profile 13 is shown by dotted, parallel and horizontal lines 14 in Figure 1; and the width (W) of the water moving profile 13 is shown by dotted, parallel and vertical lines 15 in Figure 1. The height and width of the wetted soil pattern 13 is measured; and the width/height ratio is used as a measure of the dimensional symmetry of the water wetting pattern 13.

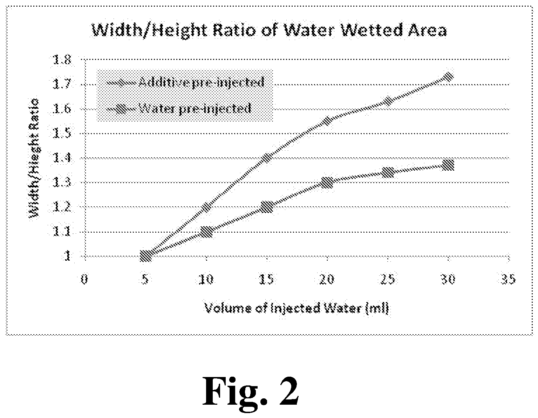

With reference to Figure 2, there is shown a graph of width/height ratio values versus volume of injected water for a water wetted area of: (1) pre-injected SNFP and (2) pre-injected water. A higher width/height ratio value indicates a bigger move of water in lateral directions than in the vertical direction and will result in a wider wetting area in the soil. The pre-injected SNFP showed a higher width/height ratio value and thus promoted a lateral move of a bigger amount of water in the lateral direction than in the vertical direction; resulting in a wider wetting area in the soil.

Comparative Example 9- Water Moving Profile in Soil with a mixture of SNFP and Urea fertilizer

A similar procedure was carried out in this Example 9 as described in Example 8, except that 1,000 grams of soil was filled in the dry semi-round vessel. The vessel bottom was tapped on the bench top three times to help settle the soil packing. 80 mL of additive solution or water was first injected at the same spot on the soil surface with a syringe pump as described in Example 9. Additional water was then injected continuously at a constant injection rate. The injection rate is 240 mL/hr. The wetted soil pattern was recorded as the water was injected.

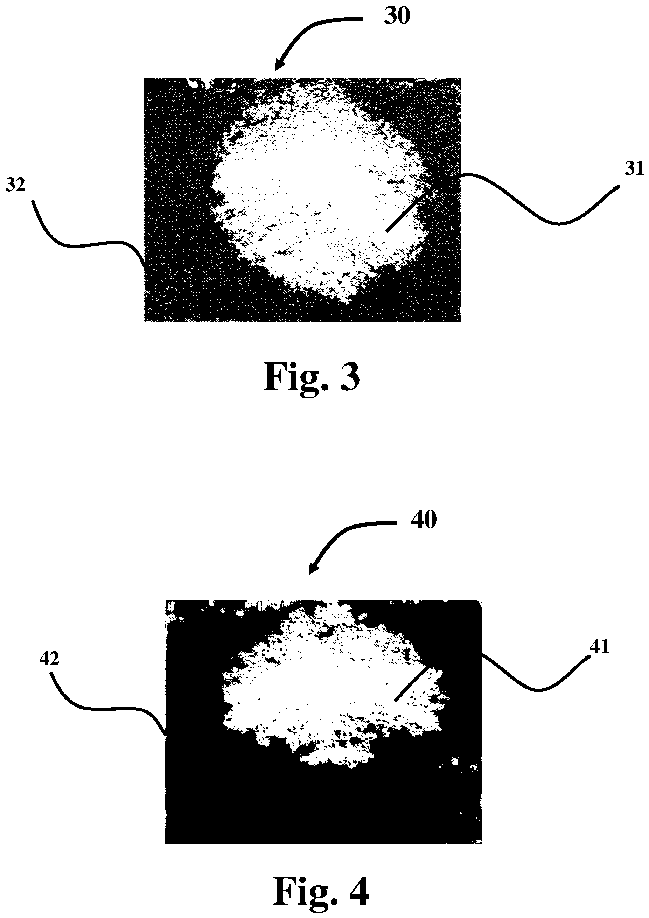

When a mixture of SNFP and urea solution (80 mL), with the concentrations for SNFP and urea at 4,000 ppm and 8,000 ppm, respectively, was pre-injected into the vessel, water moved more laterally than the case in which only water (80 mL) was pre-injected. The wetted soil pattern of two experiments are shown in Figures 3 and 4. In the Comparative Example shown in Figure 3, there is shown a graphical depiction 30 of a wetted soil profile or pattern 31 (shown in white) in soil (shown in black) 32 contained in a vessel when only water (e.g., deionized water) is pre-injected at a predetermined volume (80 mL).

With reference to Figure 4, there is shown a graphical depiction 40 of a wetted soil pattern 41 (shown in white) in soil (shown in black) when a solution of the mixture of SNFP and urea is pre-injected at volume of 80 mL. In the Example of the present invention shown in Figure 4, after the injection of 80 mL of a solution mixture of SNFP and urea, the solution of SNFP and urea mixed together moved more laterally in the soil than the solution without SNFP and urea as shown in Figure 3 (Comparative Example). This Example 9 demonstrates that SNFP can promote water lateral move in soils when SNFP is used together with fertilizers.

**Claims**

1. A method comprising providing an aqueous mixture containing a sulfonated aromatic polymer component wherein the sulfonated aromatic polymer component is sulfonated naphthalene formaldehyde polycondensate and applying the aqueous mixture to soil; wherein the method further comprises treating the soil with an aqueous solution of fertilizer after treating the soil with the aqueous mixture of sulfonated aromatic polymer component.

2. The method of Claim 1, wherein the weight average molecular weight of the sulfonated aromatic polymer component is greater than 700 grams per mole and less than five million grams per mole as determined by size exclusion chromatography.

3. The method of any previous claim, wherein the concentration of sulfonated aromatic polymer component in the aqueous mixture of sulfonated aromatic polymer component is 0.1 weight parts or more per million weight parts aqueous mixture and 50 weight-percent or less based on total weight of aqueous mixture.

4. The method of claim 3, wherein the aqueous mixture contains 500 weight parts or more and 10,000 weight parts or less of naphthalene formaldehyde condensate polymer per million weight parts of aqueous mixture.

5. The method of any previous claim, wherein the sulfonated aromatic polymer component is water soluble.

6. The method of any previous claim, wherein the aqueous mixture further comprises a fertilizer.

7. The method of Claim 6, wherein the sulfonated aromatic polymer component is naphthalene formaldehyde condensate polymer, the fertilizer is a urea-containing fertilizer and the weight ratio of naphthalene formaldehyde condensate polymer to urea-containing fertilizer is 0.001 to more and one or less.

8. The method of any previous claim, including further the step of applying water to the soil, after treating the soil with (i) an aqueous mixture including a sulfonated aromatic polymer component; or (ii) an aqueous mixture including a sulfonated aromatic polymer component and a fertilizer.

**Patentansprüche**

1. Ein Verfahren, beinhaltend das Bereitstellen einer wässrigen Mischung, enthaltend eine sulfonierte aromatische Polymerkomponente, wobei die sulfonierte aromatische Polymerkomponente sulfoniertes Naphthalenformaldehydpolykondensat ist, und das Aufbringen der wässrigen Mischung auf Erde; wobei das Verfahren ferner das Behandeln der Erde mit einer wässrigen Lösung von Düngemittel beinhaltet, nachdem die Erde mit der wässrigen Mischung von sulfonierter aromatischer Polymerkomponente behandelt worden ist.

2. Verfahren gemäß Anspruch 1, wobei das gewichtsmittlere Molekulargewicht der sulfonierten aromatischen Polymerkomponente mehr als 700 Gramm pro Mol und weniger als fünf Millionen Gramm pro Mol, wie durch Größenausschlusschromatographie bestimmt, beträgt.

3. Verfahren gemäß einem vorhergehenden Anspruch, wobei die Konzentration sulfonierter aromatischer Polymerkomponente in der wässrigen Mischung von sulfonierter aromatischer Polymerkomponente 0,1 Gewichtsteile oder mehr pro Million Gewichtsteile der wässrigen Mischung und 50 Gewichtsprozent oder weniger, bezogen auf das Gesamtgewicht der wässrigen Mischung, beträgt.

4. Verfahren gemäß Anspruch 3, wobei die wässrige Mischung 500 Gewichtsteile oder mehr und 10 000 Gewichtsteile oder weniger von Naphthalenformaldehydkondensatpolymer pro Million Gewichtsteile der wässrigen Mischung enthält.

5. Verfahren gemäß einem vorhergehenden Anspruch, wobei die sulfonierte aromatische Polymerkomponente wasserlöslich ist.

6. Verfahren gemäß einem vorhergehenden Anspruch, wobei die wässrige Mischung ferner ein Düngemittel beinhaltet.

7. Verfahren gemäß Anspruch 6, wobei die sulfonierte aromatische Polymerkomponente Naphthalenformaldehydkondensatpolymer ist, das Düngemittel ein harnstoffhaltiges Düngemittel ist und das Gewichtsverhältnis von Naphthalenformaldehydkondensatpolymer zu harnstoffhaltigem Düngemittel 0,001 bis mehr und eins oder weniger beträgt.

8. Verfahren gemäß einem vorhergehenden Anspruch, ferner umfassend den Schritt des Aufbringens von Wasser auf die Erde, nachdem die Erde mit (i) einer wässrigen Mischung, die eine sulfonierte aromatische Polymerkomponente umfasst, oder (ii) einer wässrigen Mischung, die eine sulfonierte aromatische Polymerkomponente und ein Düngemittel umfasst, behandelt worden ist.

**Revendications**

1. Un procédé comprenant la fourniture d'un mélange aqueux contenant un constituant polymère aromatique sulfoné, le constituant polymère aromatique sulfoné étant un polycondensat de naphtalène sulfoné et de formaldéhyde, et l'application du mélange aqueux sur un sol ; le procédé comprenant en outre le traitement du sol avec une solution aqueuse d'engrais après traitement du sol avec le mélange aqueux de constituant polymère aromatique sulfoné.

**2.** Le procédé de la revendication 1, dans lequel la masse moléculaire moyenne en poids du constituant polymère aromatique sulfoné est supérieure à 700 grammes par mole et inférieure à cinq millions de grammes par mole telle que déterminée par chromatographie d'exclusion stérique.

**3.** Le procédé de n'importe quelle revendication précédente, dans lequel la concentration de constituant polymère aromatique sulfoné dans le mélange aqueux de constituant polymère aromatique sulfoné est de 0,1 partie en poids ou plus par million de parties en poids de mélange aqueux et de 50 pour cent en poids ou moins rapporté au poids total de mélange aqueux.

**4.** Le procédé de la revendication 3, dans lequel le mélange aqueux contient 500 parties en poids ou plus et 10 000 parties en poids ou moins de polymère condensat de naphtalène et de formaldéhyde par million de parties en poids de mélange aqueux.

**5.** Le procédé de n'importe quelle revendication précédente, dans lequel le constituant polymère aromatique sulfoné est soluble dans l'eau.

**6.** Le procédé de n'importe quelle revendication précédente, dans lequel le mélange aqueux comprend en outre un engrais.

**7.** Le procédé de la revendication 6, dans lequel le constituant polymère aromatique sulfoné est un polymère condensat de naphtalène et de formaldéhyde, l'engrais est un engrais contenant de l'urée et le rapport en poids du polymère condensat de naphtalène et de formaldéhyde à l'engrais contenant de l'urée est de 0,001 à plus et un ou moins.

**8.** Le procédé de n'importe quelle revendication précédente, comportant en outre l'étape d'application d'eau sur le sol, après traitement du sol avec (i) un mélange aqueux comportant un constituant polymère aromatique sulfoné ; ou (ii) un mélange aqueux comportant un constituant polymère aromatique sulfoné et un engrais.

Fig. 1

**Fig. 2**

30

31

32

**Fig. 3**

40

41

42

**Fig. 4**

**EP 3 313 952 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5360465 A
- US 4575391 A
- CN 102907434 A
- US 5238480 A
- WO 2007030885 A
- US 20050022570 A